# EUROPÄISCHE PATENTSCHRIFT

(11) **EP 3 553 036 B1**
(45) Veröffentlichungstag und Bekanntmachung des Hinweises auf die Patenterteilung: **09.06.2021**
(21) Anmeldenummer: 19166518.1
(22) Anmeldetag: 01.04.2019
(51) Int. Cl.: C03C 3/089, C03C 3/093, C03C 3/11, C03C 4/20

(54) **VERFAHREN ZUM HERSTELLEN EINES GLASARTIKELS**
METHOD FOR PRODUCING A GLASS ITEM
PROCÉDÉ DE FABRICATION D'UN ARTICLE EN VERRE

(30) Priorität: 09.04.2018 DE 102018205257
(43) Veröffentlichungstag der Anmeldung: 16.10.2019
(73) Patentinhaber: SCHOTT AG, 55122 Mainz (DE)
(72) Erfinder: Grimm, Malte, 95666 Mitterteich (DE); Kass, Christof, 95643 Tirschenreuth (DE); Nass, Peter, 55120 Mainz (DE)
(74) Vertreter: Mehler Achler

(56) Entgegenhaltungen:
- DE-B3-102016 218 244
- DE-U1-202016 005 820
- US-A1- 2004 113 237

## Beschreibung

Die vorliegende Erfindung betrifft ein Verfahren zum Herstellen eines Glasartikels mit hoher hydrolytischer Resistenz, einen durch das Verfahren hergestellten Glasartikel sowie die Verwendung eines durch das Verfahren hergestellten Glasartikels.

Glasartikel wie beispielsweise Glasphiolen, können aus einer Vielzahl von Glassorten hergestellt werden. Die vorliegende Erfindung bezieht sich auf Borosilikatgläser, deren namensgebende Bestandteile Dibortrioxid (B₂O₃) und Siliziumdioxid (SiO₂) sind. Als Borosilikatgläser werden insbesondere Gläser mit SiO₂-Anteilen zwischen 60 und 80 Gew.-% sowie B₂O₃-Anteilen zwischen 5 und 20 Gew.-% bezeichnet.

Borosilikatgläser zeichnen sich durch eine sehr hohe Beständigkeit gegenüber hohen Temperaturen und Chemikalien (einschließlich Wasser) aus. Dies führt zu einer hohen hydrolytischen Resistenz, unter der allgemein eine geringe Alkaliabgabe, also eine geringe Abgabe von Erdalkalioxiden und Alkalioxiden (insbesondere Li₂O, Na₂O, K₂O, MgO, CaO, BaO, SrO) an die Umgebung, verstanden wird. Aufgrund ihrer geringen Alkaliabgabe werden Borosilikatgläser in der Regel als Gläser der hydrolytischen Klasse 1 (auch: Typ 1) gemäß ISO 719 bzw. ISO 720 klassifiziert.

Die Alkaliabgabe eines Glases oder Glasartikels lässt sich mittels der Normen DIN ISO 4802-2:2017-02 (kurz ISO 4802) und USP 660 (Glasgrieß) bzw. ISO 720 (Glasgrieß) ermitteln. Bei dem Vorgehen gemäß ISO 4802 wird ein zu prüfender Glasbehälter bzw. Rohrabschnitt, der für die Herstellung von Behältern vorgesehen ist, mit destilliertem Wasser befüllt und für 60 ± 1 min in einem Autoklav einer Temperatur von 121 ± 1 °C ausgesetzt und anschließend kontrolliert abgekühlt, wodurch eine sogenannte Extraktionslösung (auch als Eluat bezeichnet) entsteht. Die Extraktionslösung kann mittels Flammen-Atomabsorptionsspektrometrie (F-AAS) auf die enthaltene Menge an Alkali- und Erdalkalimetallen untersucht werden, wobei eine sogenannte Na₂O-Äquivalenz (Einheit mg/l, Milligramm pro Liter) ermittelt wird.

Bei dem Vorgehen gemäß USP 660 (Glasgrieß) bzw. der ISO 720 (Glasgrieß) wird mittels eines normierten Mörsers Glas zu einem Glasgrieß zerstoßen bzw. zerrieben. Beide Verfahren sind als gleichwertig anzusehen. Anschließend werden 10,0 g Glasgrieß gemeinsam mit demineralisiertem Wasser in einem Autoklav auf 121 ± 1 °C erhitzt und anschließend kontrolliert abgekühlt. In die auf diese Weise behandelte Flüssigkeit (auch Eluat genannt) wird standardgemäß Methylrot gegeben. Anschließend wird die Flüssigkeit mittels Salzsäure titriert und mit einer Kontrollflüssigkeit ohne Glasgrieß verglichen. Aus dem titrierten Volumen wird schließlich die Alkaliabgabe des Glasgrießes berechnet, die ebenfalls als Na₂O-Äquivalenz in mg/l angegeben werden kann. Da die standardgemäße Titration nur einen Summenwert der Alkali- und Erdalkalimetalle liefert, werden abweichend von der Norm die Einzelwerte der Alkali- und Erdalkalimetalle mit Hilfe der F-AAS ermittelt (Einheit mg/l, Milligramm pro Liter).

Eine Vergleichbarkeit zwischen zwei Werten der beiden unterschiedlichen Messverfahren (ISO 4802 und USP 660 bzw. ISO 720) ist jedoch nicht gegeben. Es können lediglich Werte miteinander verglichen werden, die durch das gleiche Messverfahren ermittelt wurden. Die ISO 4802 beschreibt die Resistenz der Oberfläche des gefertigten Behälters, oder in Anlehnung an die ISO 4802 die Oberfläche eines Rohrabschnittes, der zu einem Behälter umgeformt werden kann, während bei der USP 660 bzw. ISO 720 Glasgrieß untersucht wird und damit die material-intrinsische Resistenz des Glases festgestellt wird, die unabhängig von Einflüssen aus der Prozessierung ist.

Neben zahlreichen anderen Anwendungen, wie beispielsweise in der US 2006/0120105 A1 beschrieben als Glaskörper einer Lampe, werden aus Borosilikatgläsern hergestellte Glasartikel aufgrund der hohen hydrolytischen Resistenz und der hohen Beständigkeit gegenüber Chemikalien auch für die Aufbewahrung von Medikamenten oder anderen pharmazeutischen Substanzen verwendet. Für die hohe Beständigkeit gegenüber Chemikalien ist bei vielen Borosilikatgläsern ein hoher Al₂O₃-Anteil von beispielsweise 2 bis 7 Gew.-% verantwortlich. Wie jedoch bereits in DE 103 37 362 A1 und DE 10 2016 218 244 B3 beschrieben wurde, ist die Verwendung von Aluminium in Gläsern für pharmazeutische Anwendungen unerwünscht, da das Aluminium aus dem Glas in die pharmazeutische Substanz und anschließend in den Körper eines Menschen gelangen kann, wo es unter Umständen zu gesundheitlichen Schäden führt.

Ziel der DE 103 37 362 A1 und der DE 10 2016 218 244 B3 war es daher, ein aluminiumfreies Borosilikatglas zur Verfügung zu stellen, das die im Allgemeinen an Borosilikatgläser gestellten Anforderungen erfüllt. Da die Alkaliabgabe insbesondere für die Anwendung im pharmazeutischen Bereich gar nicht gering genug sein kann, besteht auch weiterhin das Interesse, aluminiumfreie Borosilikatgläser mit einer noch geringeren Alkaliabgabe zu entwickeln.

Es ist daher Aufgabe der Erfindung, die Alkaliabgabe von Artikeln aus Borosilikatgläsern zu verringern.

Diese Aufgabe wird durch ein Verfahren zum Herstellen eines Glasartikels sowie einen durch das Verfahren hergestellten Glasartikel gelöst.

Bei dem erfindungsgemäßen Verfahren zum Herstellen eines Glasartikels mit hoher hydrolytischer Resistenz wird zunächst ein Glasrohr aus einem Borosilikatglas mit einem Al₂O₃-Gehalt von unter 1 Gew.-%, insbesondere unter 0,2 Gew.-%, und einem ZrO₂-Gehalt von 2-12 Gew.-% und mit einer Glasübergangstemperatur T_{g} zu einem Glasartikel umgeformt und anschließend einer thermischen Nachbehandlung unterzogen. Bei der Umformung wird das Rohr immer bis zum schmelzflüssigen Zustand, der mehrere hundert Grad Celsius über T_{g} liegt, erwärmt. Die Umformungstemperatur liegt beispielsweise bei 1500 - 1600 °C.

Das Verfahren ist dadurch gekennzeichnet, dass der Glasartikel bei der thermischen Nachbehandlung für eine Behandlungszeit t_{B} ≥ 5 min einer Behandlungstemperatur T_{B} ≥ T_{g} + 5 K ausgesetzt ist und anschließend abgekühlt wird.

Vorteilhafterweise wird der Glasartikel am Ende der thermischen Nachbehandlung entspannungsgekühlt. Das Entspannungskühlen startet beispielsweise bei T_{g}+30K mit einer Abkühlrate von 2K/min und endet bei T_{g}-30K. Alle anderen Abkühlraten sind beliebig, also insbesondere die Abkühlrate bis T_{g}+30K und jene ab T_{g}-30K bis Raumtemperatur.

Idealerweise kann die thermische Nachbehandlung im Rahmen der Glasartikelproduktion erfolgen. Die thermische Nachbehandlung inklusive dem Entspannungskühlen kann in einem einzigen Ofen, insbesondere einem in-line Ofen, durchgeführt werden. Umgeformte Glasbehälter werden demnach bevorzugt nach der Umformung thermisch nachbehandelt und am Ende dieser Nachbehandlung entspannungsgekühlt.

Alternativ kann das Entspannungskühlen auch in einem von der erfindungsgemäßen, thermischen Nachbehandlung getrennten Prozess durchgeführt werden. So kann der Glasartikel nach dem Halten auf T_{B} beispielsweise ungesteuert abgekühlt werden, insbesondere bis auf RT. Das Entspannungskühlen kann danach zu einem beliebigen Zeitpunkt erfolgen.

Aus dem Stand der Technik sind lediglich Wärmebehandlungen von Glasartikeln zur Spannungsreduzierung bekannt. Dabei wurde der umgeformte Glasartikel beispielsweise für wenige Sekunden einer Temperatur von T_{g} + 30 °C ausgesetzt. Die Erfinder haben überraschend festgestellt, dass sich durch die erfindungsgemäße thermische Nachbehandlung eine Verbesserung der hydrolytischen Resistenz, also u.a. eine geringere Alkaliabgabe und eine geringere Aluminiumabgabe, erreichen lässt. Der Grund für die verringerte Alkaliabgabe der Glasartikel nach der erfindungsgemäßen thermischen Nachbehandlung ist bisher unbekannt. Es konnte aber festgestellt werden, dass die Reduzierung der Alkaliabgabe bei Borosilikatgläsern nur dann eintritt, wenn das Glas abgesehen von unvermeidbaren Verunreinigungen einen Al₂O₃-Gehalt von unter 1 Gew.-% und einen ZrO₂-Gehalt von 2-12 Gew.-%, insbesondere von 2 - 11 Gew.-%, besonders bevorzugt von 2 - 10 Gew.-% und ganz besonders bevorzugt von 2 - 9 Gew.-%, aufweist. Oberhalb von 12 Gew.-% sind hohe Schmelztemperaturen erforderlich und die Schmelze wird zähflüssiger, wodurch der Herstellungsprozess aufwendiger und energieintensiver wird und damit unwirtschaftlich ist. Zudem ist ZrO₂ an sich ein teurer Rohstoff, sodass mehr als 9 Gew.-% zunehmend unwirtschaftlicher und mehr als 12 Gew.-% im Glas als gänzlich unwirtschaftlich angesehen werden.

Wie beschrieben weist das erfindungsgemäß verwendete Borosilikatglas einen Al₂O₃-Anteil unter 1 Gew.-%, insbesondere unter 0,2 Gew.-%, auf. Bevorzugt wird sogar ein aluminiumfreies Borosilikatglas verwendet, da Aluminium aus dem Glas bei der Verwendung für einen pharmazeutischen Glasartikel in den Körper eines Menschen gelangen und zu gesundheitlichen Schäden führen kann. Als "aluminiumfrei" im Sinne dieser Schrift wird ein Glas dann bezeichnet, wenn der Al₂O₃-Anteil < 0,1 Gew.-% ist.

Nach der Umformung und vor der thermischen Nachbehandlung kann der Glasartikel bis auf eine Temperatur unterhalb der Glasübergangstemperatur T_{g} und besonders bevorzugt auf Raumtemperatur T_{R} = 20 ± 5 °C abgekühlt werden. Der Glasartikel wird dann anschließend wieder von Raumtemperatur T_{R} = 20 ± 5 °C bis auf die Behandlungstemperatur T_{B} erwärmt werden. Die abschließende Abkühlung erfolgt bevorzugt wieder bis auf Raumtemperatur T_{R}. Auf diese Weise kann die thermische Nachbehandlung zu einem beliebigen Zeitpunkt nach dem Umformen durchgeführt werden. Die zwischenzeitliche Abkühlung auf T_{R} kann erfolgen, da die Prozesszeiten durch die thermische Nachbehandlung ansteigen. So kann insbesondere in einem ersten Konverter nur umgeformt und in einem zweiten Konverter die thermische Nachbehandlung durchgeführt werden. Die beiden Konverter sind räumlich und die beiden Prozesse zeitlich voneinander getrennt.

Während das zwischenzeitliche Abkühlen auf Raumtemperatur unter dem Gesichtspunkt der Flexibilität des Verfahrens Vorzüge aufweist, ist es mit Blick auf die Wirtschaftlichkeit des Verfahren vorteilhaft, den Glasartikel nach der Umformung nicht auf Raumtemperatur abzukühlen, da ein anschließendes erneutes Aufheizen im Rahmen der erfindungsgemäßen thermischen Nachbehandlung einen zusätzlichen Energieeinsatz erfordert. Zur Verbesserung der Wirtschaftlichkeit wird der Glasartikel daher nach dem Umformen ohne Zwischenlagerung der thermischen Nachbehandlung zugeführt.

Vor der thermischen Nachbehandlung kann der Glasartikel somit eine Temperatur oberhalb oder unterhalb T_{B} oder in Ausnahmefällen gleich T_{B} aufweisen. Hat der Glasartikel nach der Umformung noch eine Temperatur oberhalb T_{B}, wird er zunächst auf T_{B} abgekühlt und anschließend auf T_{B} gehalten. Wurde der Glasartikel nach der Umformung auf maximal T_{R} abgekühlt, so weist er vor der thermischen Nachbehandlung eine Temperatur unterhalb T_{B} auf. Zu Beginn der thermischen Nachbehandlung wird der Glasartikel dann zunächst erwärmt. Anschließend erfolgt das erfindungsgemäße Halten auf T_{B}. Weist der Glasartikel bereits eine Temperatur gleich T_{B} auf, so kann unmittelbar der Haltevorgang durchgeführt werden.

Die Wirkung der erfindungsgemäßen thermischen Nachbehandlung lässt sich sowohl durch eine Erhöhung der Behandlungstemperatur T_{B} als auch durch eine Verlängerung der Behandlungszeit t_{B} verbessern. So beträgt die Behandlungstemperatur bevorzugt T_{B} ≥ T_{g} + 15 K, insbesondere T_{B} ≥ T_{g} + 30 K und besonders bevorzugt T_{B} ≥ T_{g} + 50 K. Die Behandlungszeit beträgt bevorzugt t_{B} ≥ 15 min, insbesondere t_{B} ≥ 30 min, besonders bevorzugt t_{B} ≥ 60 min und noch weiter bevorzugt t_{B} ≥ 120 min. Eine Verbesserung der hydrolytischen Resistenz tritt sowohl mit der Erhöhung der Behandlungstemperatur als auch mit der Verlängerung der Behandlungszeit ein.

Das Glasrohr wird bevorzugt im Danner-, Vello- oder A-Zug- bzw. Down-Draw-Verfahren hergestellt. Im Anschluss wird das Glasrohr zu einem Behälter bzw. einem Glasartikel umgeformt.

Besonders bevorzugt wird ein Borosilikatglas verwendet, das folgende Zusammensetzung aufweist:

| | |
|---|---|
| - SiO₂ | 60 - 78 Gew.-%, |
| - B₂O₃ | 7 - 20 Gew.-%, |
| - Li₂O | 0 - 2 Gew.-%, |
| - Na₂O | 0 - 6,5 Gew.-%, |
| - K₂O | 2,5 - 12 Gew.-%, |
| - ZnO | 0 - 2 Gew.-%, |
| - ZrO₂ | 2 - 12 Gew.-%, |
| - Läutermittel | 0 - 1 Gew.-%, |
| - Al₂O₃ | < 1 Gew.-%, |
| - optional einen oder mehrere der Bestandteile MgO, CaO, BaO, TiO₂, SrO mit insgesamt < 2 Gew.-%, und | |
| - unvermeidbare Verunreinigungen. | |

Neben den oben genannten Bestandteilen der Zusammensetzung des Borosilikatglases ist es grundsätzlich möglich, dem Borosilikatglas weitere Bestandteile beizumengen, wenn die weiteren Bestandteile keinen negativen Einfluss auf die erfindungswesentlichen Eigenschaften des gefertigten Glasartikels, insbesondere dessen hydrolytische Resistenz, ausüben. Besonders bevorzugt sind jedoch Ausführungsformen der Erfindung, bei denen das Borosilikatglas ausschließlich aus den in der oben angegebenen Zusammensetzung aufgeführten Bestandteilen besteht.

Als Läutermittel können Halogenide (insbesondere Fluor und Chlor), Ceroxid, Eisenoxid, Sulfat, Antimonoxid, Arsenoxid und Zinnoxid der Glasschmelze wahlweise einzeln oder in Kombination als Läutermittel zugesetzt werden und sind im Endprodukt innerhalb der oben angegebenen Gehalte nachweisbar. Optional sind MgO, CaO, BaO, SrO, TiO₂ und unvermeidbare Verunreinigungen im Endprodukt innerhalb der oben angegebenen Gehalte nachweisbar.

Halogenide, also insbesondere Fluor und Chlor, sind besonders wirksame Läutermittel. Wird Flour oder Chlor für die Läuterung eingesetzt, so ist bereits ein geringerer Gehalt ausreichend. Der Flour- oder Chlorgehalt der Zusammensetzung beträgt dann bevorzugt 0 - 0,2 Gew.-%, und zwar insbesondere dann, wenn Flour bzw. Chlor als einziges Läutermittel verwendet wird.

Bei Al₂O₃ ist ein Anteil unter 1 Gew.-% akzeptabel, da auch bei solchen Anteilen nur geringe Mengen Aluminium in eine mit dem Glas in Kontakt stehende Flüssigkeit gelangt. Bevorzugt ist das Glas jedoch aluminiumfrei. Im Rahmen der vorliegenden Erfindung gilt ein Glas als aluminiumfrei, wenn es weniger als 0,1 Gew.-% Al₂O₃ aufweist.

Als unvermeidbare Verunreinigungen werden insbesondere Inhaltsstoffe mit Anteilen von jeweils ≤ 0,2 Gew.-% angesehen.

Das Borosilikatglas weist bevorzugt eine Glasübergangstemperatur 500°C ≤ T_{g} ≤ 620°C auf. Bei der Glasübergangstemperatur T_{g} weist das Glas im Allgemeinen eine Viskosität (η) auf, bei der folgendes gilt: 12 Pa • s ≤ lg(η) ≤ 13 Pa • s.

Um zu vermeiden, dass sich der Glasartikel durch die thermische Nachbehandlung verformt, ist bei vorteilhaften Weiterbildungen vorgesehen, dass der Glasartikel einer Behandlungstemperatur T_{B} ≤ T_{g}+100 K ausgesetzt ist. Dadurch weist der Glasartikel während der thermischen Nachbehandlung eine ausreichende Stabilität auf, sodass eine Verformung weitestgehend ausgeschlossen werden kann.

Bevorzugt ist die erfindungsgemäße thermische Nachbehandlung, bei welcher der Glasartikel für eine Behandlungszeit t_{B} ≥ 5 min einer Behandlungstemperatur T_{B} ≥ T_{g} + 5 K ausgesetzt ist und anschließend abgekühlt wird, der letzte Behandlungsschritt unter Wärmeeinfluss (größer Raumtemperatur T_{R}) des Verfahrens zum Herstellen eines Glasartikels mit hoher hydrolytischer Resistenz.

Die erfindungsgemäße thermische Nachbehandlung ist grundsätzlich mit einem zusätzlichen Energieaufwand verbunden. Um diesen Energieaufwand zu begrenzen und auf diese Weise die Wirtschaftlichkeit des erfindungsgemäßen Verfahrens zu erhalten ist bevorzugt vorgesehen, dass der Glasartikel für eine Behandlungszeit t_{B} ≤ 360 min der Temperatur T_{B} ausgesetzt ist.

Bei dem erfindungsgemäßen Verfahren kommt es besonders auf das Halten des Glasartikels während der Behandlungszeit t_{B} auf der Behandlungstemperatur T_{B} an. Eine Steuerung der Erwärmung oder der Abkühlung des Glasartikels erfordert zusätzliche Maßnahmen und Gerätschaften, welche die Komplexität des erfindungsgemäßen Verfahrens erhöhen und die Wirtschaftlichkeit senken würden. Bei vorteilhaften Weiterbildungen ist daher vorgesehen, dass der Glasartikel zu Beginn der thermischen Nachbehandlung in einem Ofen angeordnet wird, der auf die Behandlungstemperatur T_{B} eingestellt ist, wodurch eine zusätzliche Steuerung entfällt. Besonders vorteilhaft ist die Kombination der thermischen Nachbehandlung (wie oben beschrieben) in einem Ofen zusammen mit der üblicherweise nachgelagerten Entspannungskühlung zur Reduzierung von Spannungen im Glasbehälter ("In-Line-Prozess"), die sich durch die Umformung im Glasbehälter gebildet haben.

Die Aufgabe der Erfindung wird auch durch einen Glasartikel, der nach dem oben beschriebenen Verfahren hergestellt ist, gelöst.

Darüber hinaus wird die Aufgabe der Erfindung auch durch einen Glasartikel mit hoher hydrolytischer Resistenz aus einem, von unvermeidbaren Verunreinigungen abgesehen, aluminiumfreien Borosilikatglas mit einem ZrO₂-Gehalt von 2 - 12 Gew.-% mit einer Alkaliabgabe A ≤ 0,5 mg/l Na₂O-Äquivalenz gemäß ISO 4802 oder einer Alkaliabgabe A ≤ 3 mg/l Na₂O-Äquivalenz gemäß USP 660 (Glasgrieß) gelöst. Der Glasartikel ist bevorzugt nach dem oben beschriebenen Verfahren hergestellt.

Der Glasartikel ist bevorzugt ein Glasfläschchen, eine Glasphiole, eine Ampulle, insbesondere eine Glasampulle oder eine Zylinderampulle, eine Karpule (Cartridge), ein Spritzenkörper, ein Vial, ein Stab, ein innen- und/oder außenstrukturiertes rohrähnliches Gebilde oder Rohr oder ein Halbzeug zur Herstellung eines der genannten Artikel oder nach USP 660 hergestellter Glasgrieß.

Bei vorteilhaften Weiterbildungen weist der Glasartikel eine um ≥ 15 %, bevorzugt ≥ 40 %, besonders bevorzugt ≥ 50 % reduzierte Alkaliabgabe A gegenüber einem unbehandelten Referenzglasartikel gleicher Zusammensetzung auf. Ebenso kann durch das erfindungsgemäße Verfahren bezüglich einzelner Alkali- oder Erdalkalioxide eine Verringerung der jeweiligen Alkaliabgabe um ≥ 15 %, bevorzugt ≥ 40 %, besonders bevorzugt ≥ 50 % erreicht werden. Der erfindungsgemäße Glasartikel weist daher bevorzugt eine solche Verringerung bezüglich zumindest eines Alkali- oder Erdalkalioxids auf. Die Alkaliabgabe wird bevorzugt gemäß ISO 4802-2 oder USP 660 (Glasgrieß) oder ISO 720 (Glasgrieß) ermittelt. Unbehandelt bedeutet in diesem Zusammenhang, dass der Referenzglasartikel nicht der erfindungsgemäßen thermischen Nachbehandlung unterzogen wurde.

Das Borosilikatglas des Glasartikels weist bevorzugt die folgende Zusammensetzung auf:

| | |
|---|---|
| - SiO₂ | 60 - 78 Gew.-%, |
| - B₂O₃ | 7 - 20 Gew.-%, |
| - Li₂O | 0 - 2 Gew.-%, |
| - Na₂O | 0 - 6,5 Gew.-%, |
| - K₂O | 2,5 - 12 Gew.-%, |
| - ZnO | 0 - 2 Gew.-%, |
| - ZrO₂ | 2 - 12 Gew.-%, |
| - Läutermittel | 0 - 1 Gew.-%, |
| - Al₂O₃ | < 1 Gew.-%, |
| - optional einen oder mehrere der Bestandteile MgO, CaO, BaO, TiO₂, SrO mit insgesamt < 2 Gew.-%, und | |
| - unvermeidbare Verunreinigungen. | |

Auch hier sind in der Zusammensetzung weitere Bestandteile grundsätzlich nicht ausgeschlossen, wenn die weiteren Bestandteile keinen negativen Einfluss auf die erfindungswesentlichen Eigenschaften des gefertigten Glasartikels, insbesondere dessen hydrolytische Resistenz, ausüben. Besonders bevorzugt sind abermals Ausführungsformen, bei denen das Borosilikatglas des Glasartikels ausschließlich aus den in der obigen Zusammensetzung aufgeführten Bestandteilen besteht.

Die Aufgabe der Erfindung wird auch durch die Verwendung des oben beschriebenen Glasartikels als Aufbewahrungsartikel für pharmazeutische Substanzen, die auch ein Endkunde erhalten kann, gelöst.

Ebenso wird die Aufgabe der Erfindung durch die Verwendung des erfindungsgemäßen Glasartikels im Bereich der Medizintechnik gelöst, insbesondere durch die Verwendung als Lagerungsbehälter für Chemikalien, die in Messgeräten oder Anwendungsgeräten im Bereich der Medizintechnik verwendet werden. Dort ist neben der geringen Alkaliabgabe auch der geringe Aluminiumgehalt des Glasartikels von Vorteil.

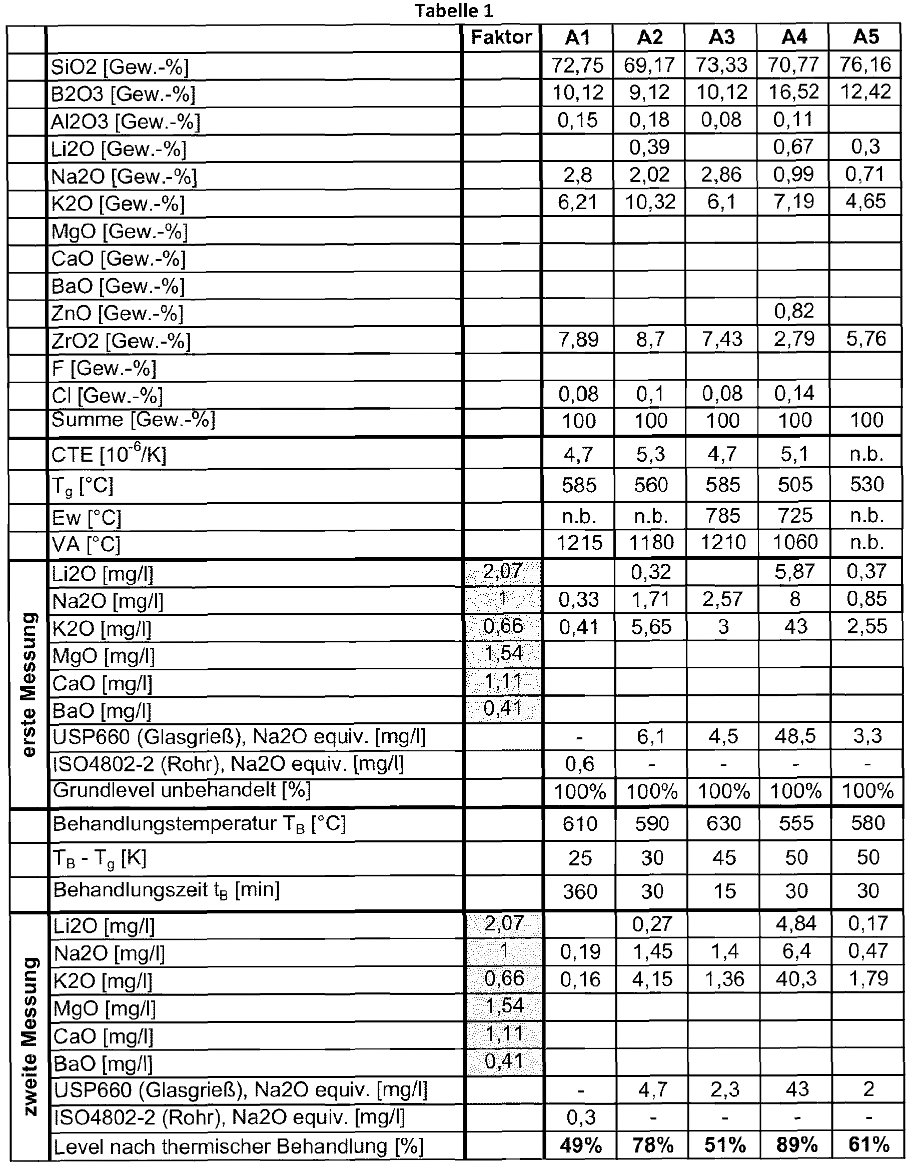

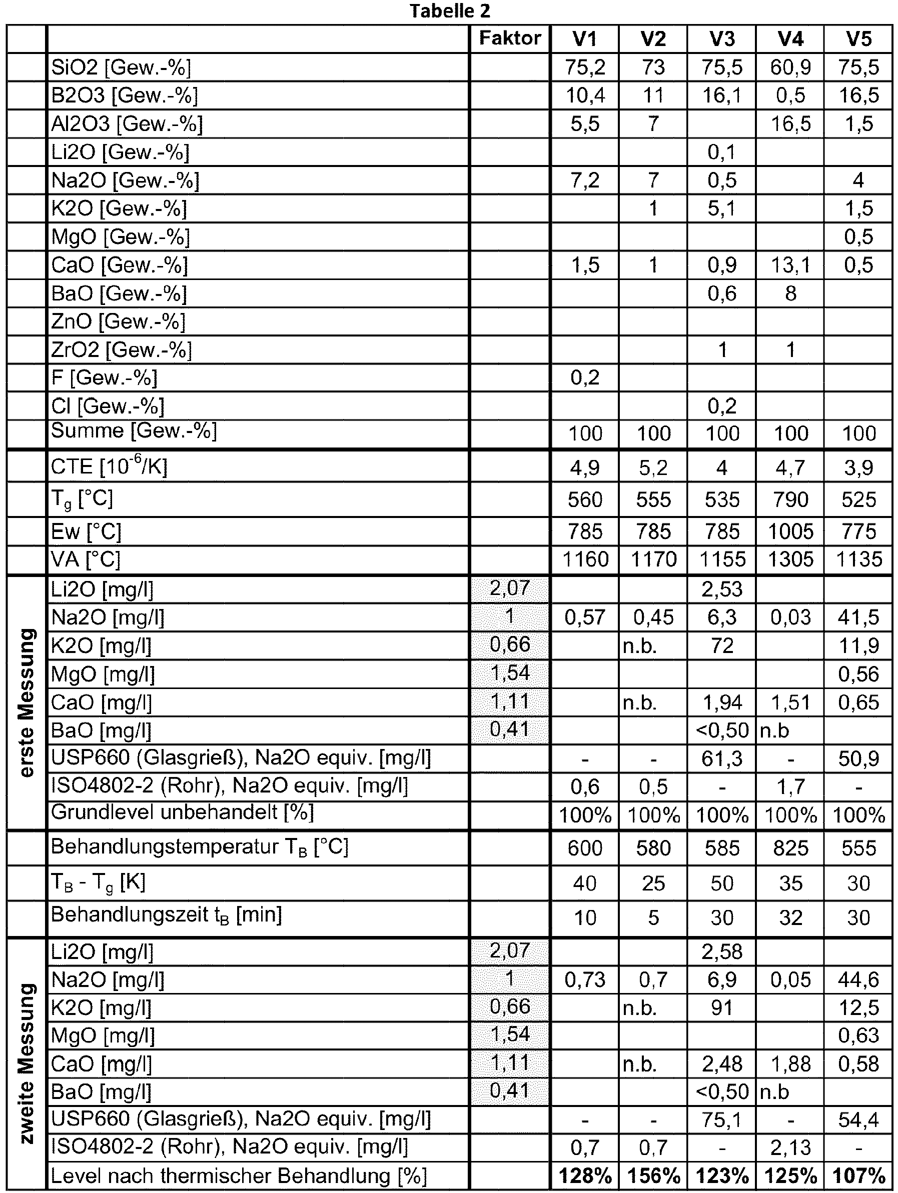

In Tabelle 1 sind erfindungsgemäße Ausführungsbeispiele (A1 bis A5) und in Tabelle 2 nicht-erfindungsgemäße Vergleichsbeispiele (V1 bis V5) aufgeführt. Für jedes Beispiel ist die Glaszusammensetzung angegeben. Zusätzlich enthalten die Tabellen 1 und 2 vier Kennwerte: den Wärmeausdehnungskoeffizienten (CTE), die Glasübergangstemperatur (T_{g}), den Erweichungspunkt (Ew) sowie die Verarbeitungstemperatur (VA). In den Tabellen steht n.b. für nicht bestimmt.

Die Glaszusammensetzungen der Ausführungsbeispiele A1 bis A5 weisen abgesehen von unvermeidbaren Verunreinigungen kein Al₂O₃ auf. Es handelt sich somit jeweils um ein aluminiumfreies Borosilikatglas. Das Glas des Vergleichsbeispiels V3 ist ebenfalls ein aluminiumfreies Borosilikatglas. Die Gläser der Vergleichsbeispiele V1, V2 und V5 sind ebenfalls Borosilikatgläser, jedoch keine aluminiumfreien. Bei dem Glas des Vergleichsbeispiels V4 handelt es sich um ein Aluminosilikatglas. Dieses Glas weist einen Al₂O₃-Gehalt von 16,5 Gew.-% und einen ZrO₂-Anteil von 1 Gew.-% auf. Dieses Beispiel zeigt, dass das Vorhandensein einer geringen Menge ZrO₂ nicht zu einer Verbesserung der Alkaliabgabe nach einer thermischen Nachbehandlung führt.

Aus den Tabellen 1 und 2 gehen für jedes der Beispiele zwei Messungen der Alkaliabgabe hervor. Eine erste Messung wurde bei einem Referenzartikel ohne thermische Nachbehandlung, die zweite Messung bei einem durch das erfindungsgemäße Verfahren thermisch nachbehandelten Artikel durchgeführt. Die Messungen wurden entweder mittels USP 660 (Glasgrieß) bzw. ISO 720 (Glasgrieß) oder mittels ISO 4802 durchgeführt, wobei jeweils die Na₂O-Äquivalenz angegeben ist. Bei den Vergleichsbeispielen V2 und V4 wurden nur die Abgabe ausgewählter Oxide ermittelt.

In den Tabellen 1 und 2 sind für die Berechnung der Na₂O-Äquivalenz Faktoren für die Alkali- oder Erdalkalimetalloxide Li₂O, Na₂O, K₂O, MgO, CaO und BaO angegeben. Die Faktoren bestimmen die Gewichtung der einzelnen Bestandteile für die Berechnung der Na₂O-Äquivalenz. Die Faktoren werden anhand des Molverhältnisses zwischen Na₂O und dem entsprechenden Oxid bestimmt (z.B. für K₂O: M(Na₂O)/M(K₂O) = [61,979/(2*39,098+15,999)] = 0,658). Dieser Faktor geht auch aus der DIN ISO 4802-2:2017 hervor. Bei der Berechnung der Na₂O-Äquivalenz wird jeder Messwert für die sechs Bestandteile mit dem dazugehörigen Faktor multipliziert und anschließend werden die dadurch erhaltenen Werte summiert.

Zudem sind für jedes Beispiel die Behandlungszeit t_{B}, die Behandlungstemperatur T_{B} sowie die Differenz T_{B} - T_{g} aufgeführt. Die Behandlungszeit t_{B} beträgt bei den Ausführungsbeispielen A1 bis A5 zwischen 15 und 360 Minuten. Bei den Vergleichsbeispielen liegen Behandlungszeiten t_{B} zwischen 5 und 32 Minuten vor. Die Differenz T_{B} - T_{g} lag sowohl bei den Ausführungsbeispielen als auch bei den Vergleichsbeispielen zwischen 25 und 50 K.

Bei den Ausführungsbeispielen A1 bis A5 zeigt sich eine deutliche Reduzierung der Alkaliabgabe durch das erfindungsgemäße Verfahren auf bis zu 49 % des Referenzwertes des unbehandelten Ausgangsglases. Im Gegensatz dazu führt die erfindungsgemäße thermische Nachbehandlung bei den Vergleichsbeispielen V1 bis V5 sogar zu einer Erhöhung der Alkaliabgabe auf bis zu 156 % des Referenzwerts. Dies wird von den Erfindern auf das nicht oder in zu geringem Maße enthaltene ZrO₂ zurückgeführt.

Der Einfluss des ZrO₂-Gehalts auf die Wirksamkeit des erfindungsgemäßen Verfahrens ist besonders anhand des Vergleichsbeispiels V3 sichtbar. Das Glas dieses Versuchs ist zwar aluminiumfrei, der ZrO₂-Gehalt liegt jedoch bei nur 1 Gew.-% und damit außerhalb des erfindungsgemäßen Bereichs. Die Messung der Alkaliabgabe zeigt, dass bei diesem Vergleichsbeispiel die Alkaliabgabe durch die erfindungsgemäße thermische Nachbehandlung ansteigt. Bei den aluminiumfreien Gläsern der Ausführungsbeispiele A1 bis A5 in Tabelle 1 ist jeweils ein ZrO₂-Gehalt zwischen 2 und 12 Gew.-% vorhanden und die Alkaliabgabe sinkt durch die erfindungsgemäße thermische Nachbehandlung.

**Tabelle 3**

| Versuchsreihe | | AD in mm | WD in mm | Art | T_{B} in °C | T_{B}-T_{g} in K | t_{B} in min | Na₂O-Äquivalenz in mg/l | Niveau Alkaliabgabe |
|---|---|---|---|---|---|---|---|---|---|
| VR1 | a | 14,25 | 0,95 | Rohr | --- | --- | --- | 0,59 | 100% |
| | b | 14,25 | 0,95 | Rohr | 610 | 25 | 360 | 0,3 | 50% |
| VR2 | a | 16 | 1 | Rohr | --- | --- | --- | 0,67 | 100% |
| | b | 16 | 1 | Rohr | 590 | 5 | 5 | 0,42 | 63% |
| | c | 16 | 1 | Rohr | 590 | 5 | 15 | 0,37 | 56% |
| | d | 16 | 1 | Rohr | 590 | 5 | 30 | 0,32 | 47% |
| | e | 16 | 1 | Rohr | 590 | 5 | 120 | 0,3 | 44% |
| | f | 16 | 1 | Rohr | 590 | 5 | 360 | 0,28 | 41% |
| VR3 | a | 16 | 1 | Rohr | --- | --- | --- | 0,61 | 100% |
| | b | 16 | 1 | Rohr | 610 | 25 | 5 | 0,41 | 67% |
| | c | 16 | 1 | Rohr | 610 | 25 | 15 | 0,38 | 62% |
| | d | 16 | 1 | Rohr | 610 | 25 | 30 | 0,3 | 50% |
| | e | 16 | 1 | Rohr | 610 | 25 | 60 | 0,31 | 50% |
| | f | 16 | 1 | Rohr | 610 | 25 | 360 | 0,31 | 50% |
| VR4 | a | 16 | 1 | Rohr | --- | --- | --- | 0,6 | 100% |
| | b | 16 | 1 | Rohr | 630 | 45 | 5 | 0,32 | 53% |
| | c | 16 | 1 | Rohr | 630 | 45 | 15 | 0,32 | 53% |
| | d | 16 | 1 | Rohr | 630 | 45 | 30 | 0,3 | 49% |
| | e | 16 | 1 | Rohr | 630 | 45 | 120 | 0,27 | 45% |
| | f | 16 | 1 | Rohr | 630 | 45 | 360 | 0,25 | 41% |
| VR5 | a | 8,65 | 0,9 | Rohr | --- | --- | --- | 1,29 | 100% |
| | b | 8,65 | 0,9 | Rohr | 600 | 15 | 45 | 0,91 | 71% |
| | c | 8,65 | 0,9 | Rohr | 650 | 65 | 30 | 0,71 | 55% |
| VR6 | a | 16 | 1 | Rohr | --- | --- | --- | 0,63 | 100% |
| | b | 16 | 1 | Rohr | 685 | 100 | 60 | 0,25 | 39% |
| | c | 16 | 1 | Rohr | 685 | 100 | 60 | 0,29 | 47% |
| VR7 | a | 16 | 1 | Glasgrieß | --- | --- | --- | 4,54 | 100% |
| | b | 16 | 1 | Glasgrieß | 630 | 45 | 15 | 2,29 | 51% |
| | c | 16 | 1 | Glasgrieß | 610 | 25 | 60 | 3,8 | 84% |
| VR8 | a | 16 | 1 | 2R Fläschchen | --- | --- | --- | 3,08 | 100% |
| | b | 16 | 1 | 2R Fläschchen | 610 | 25 | 360 | 1,74 | 57% |
| VR9 | a | 8,65 | 0,9 | Karpule | --- | --- | --- | 1,02 | 100% |
| | b | 8,65 | 0,9 | Karpule | 610 | 25 | 360 | 0,48 | 47% |
| VR10 | a | 8,65 | 0,9 | Karpule | --- | --- | --- | 1,16 | 100% |
| | b | 8,65 | 0,9 | Karpule | 610 | 25 | 360 | 0,46 | 40% |
| VR11 | a | 8,65 | 0,9 | Karpule | --- | --- | --- | 1,08 | 100% |
| | b | 8,65 | 0,9 | Karpule | 610 | 25 | 360 | 0,49 | 46% |
| VR12 | a | 8,65 | 0,9 | Karpule | --- | --- | --- | 1,26 | 100% |
| | b | 8,65 | 0,9 | Karpule | 610 | 25 | 360 | 0,47 | 37% |

Die Tabelle 3 zeigt Ergebnisse von insgesamt zwölf Versuchsreihen VR1 bis VR12. Bei den Versuchsreihen wurden jeweils zwischen zwei (a, b) und sechs (a bis f) Versuche durchgeführt. Dabei wurden ausgehend von einem Referenzartikel (jeweils Versuch a) Versuche mit unterschiedlichen Behandlungstemperaturen T_{B} und Behandlungszeiten t_{B} durchgeführt.

Für sämtliche Versuche wurde ein Glas mit folgender Zusammensetzung verwendet: 73,3 Gew.-% SiO₂; 10,1 Gew.-% B₂O₃; 2,9 Gew.-% Na₂O; 6,1 Gew.-% K₂O; 7,4 Gew.-% ZrO₂; 0,1 Gew.-% Cl und 0,1 Gew.-% Al₂O₃. Der Al₂O₃-Anteil stammt aus Verunreinigungen der Rohstoffe, die zur Herstellung des Glases verwendet wurden. Das verwendete Glas hat eine Glasübergangstemperatur T_{g} = 585°C. Mit Ausnahme der Versuchsreihe VR7 wurden die Versuche gemäß ISO 4802 durchgeführt. Die Versuchsreihe VR7 wurde gemäß USP 660 (Glasgrieß) durchgeführt, um zu untersuchen, ob die Reduzierung der Alkaliabgabe unabhängig vom Glasmaterialtyp ist (Grieß, Rohr bzw. Behälter).

Bei den Versuchsreihen nach ISO 4802 wurden Rohre mit insgesamt drei unterschiedlichen Rohrgeometrien verwendet. Die Rohre der Versuchsreihe VR1 wiesen einen Außendurchmesser AD = 14,25 mm und eine Wanddicke WD = 0,95 mm auf. Bei den Versuchsreihen VR2 bis VR4 und VR6 bis VR8 wurden Rohre mit AD = 16 mm und WD = 1 mm verwendet. Die Versuchsreihen VR5 sowie VR9 bis VR12 wurden anhand von Rohren mit AD = 8,65 mm und WD = 0,9 mm durchgeführt. Sämtliche Versuchsreihen zeigen die Wirksamkeit des erfindungsgemäßen Verfahrens. Das erfindungsgemäße Verfahren ist daher unabhängig von der Rohrgeometrie anwendbar.

Ebenso verhält es sich mit der Art des Glasartikels, da Versuchsreihen der Tabelle 3 an Rohren und verschiedenen Behältern durchgeführt wurden und - wie oben erwähnt - bei sämtlichen Versuchsreihen eine Verringerung der Alkaliabgabe durch das erfindungsgemäße Verfahren eintrat.

Anhand der Versuchsreihen VR2 bis VR4 ist zu beobachten, dass mit steigender Behandlungsdauer t_{B} die Alkaliabgabe abnimmt. Ein Vergleich zwischen VR2 und VR4 zeigt außerdem, dass bei höherer Behandlungstemperatur T_{B} bei gleicher Behandlungszeit t_{B} die Reduzierung der Alkaliabgabe größer wird. Dies gilt insbesondere für kurze Behandlungszeiten.

Der Einfluss der Behandlungstemperatur T_{B} bei dem erfindungsgemäßen Verfahren lässt sich auch anhand der Versuchsreihen VR5 und VR7 erkennen. Die Versuche VR5c und VR7b erreichen im Vergleich mit den Versuchen VR5b und VR7c trotz einer geringeren Behandlungszeit t_{B} ein niedrigeres Niveau der Alkaliabgabe. Der Grund hierfür liegt offenbar in der Behandlungstemperatur T_{B}, die bei den Versuchen VR5c bzw. VR7b höher ist als bei den Versuchen VR5b bzw. VR7c. Hierbei ist anzumerken, dass bei den Versuchen VR7b und VR7c zunächst ein unbehandeltes Glasrohr gemäß USP 660 zu Glasgrieß verarbeitet und anschließend der erfindungsgemäßen thermischen Nachbehandlung unterzogen und die Na₂O-Äquivalenz gemäß USP 660 bzw. ISO 720 ermittelt wurde.

## Patentansprüche

1. Verfahren zum Herstellen eines Glasartikels mit hoher hydrolytischer Resistenz, bei dem zunächst ein Glasrohr aus einem Borosilikatglas mit einem Al₂O₃-Gehalt von unter 1 Gew.-% und einem ZrO₂-Gehalt von 2 - 12 Gew.-% und mit einer Glasübergangstemperatur T_{g} zu einem Glasartikel umgeformt und anschließend einer thermischen Nachbehandlung unterzogen wird,
**dadurch gekennzeichnet, dass** der Glasartikel bei der thermischen Nachbehandlung für eine Behandlungszeit t_{B} ≥ 5 min einer Behandlungstemperatur T_{B} ≥ T_{g} + 5 K ausgesetzt ist und anschließend abgekühlt wird.

2. Verfahren zum Herstellen eines Glasartikels gemäß Anspruch 1,
**dadurch gekennzeichnet, dass** das Borosilikatglas die folgende Zusammensetzung aufweist:
| | |
|---|---|
| - SiO₂ | 60 - 78 Gew.-%, |
| - B₂O₃ | 7 - 20 Gew.-%, |
| - Li₂O | 0 - 2 Gew.-%, |
| - Na₂O | 0 - 6,5 Gew.-%, |
| - K₂O | 2,5 - 12 Gew.-%, |
| - ZnO | 0 - 2 Gew.-%, |
| - ZrO₂ | 2 - 12 Gew.-%, |
| - Läutermittel | 0 - 1 Gew.-%, |
| - Al₂O₃ | < 1 Gew.-%, |
| - optional einen oder mehrere der Bestandteile MgO, CaO, BaO, TiO₂, SrO mit insgesamt < 2 Gew.-%, und | |
| - unvermeidbare V erunreinigungen. | |

3. Verfahren zum Herstellen eines Glasartikels gemäß Anspruch 1 oder 2,
**dadurch gekennzeichnet, dass** das Borosilikatglas eine Glasübergangstemperatur 500°C ≤ T_{g} ≤ 620°C aufweist.

4. Verfahren zum Herstellen eines Glasartikels gemäß einem der vorhergehenden Ansprüche,
**dadurch gekennzeichnet, dass** der Glasartikel am Ende der thermischen Nachbehandlung entspannungsgekühlt wird.

5. Verfahren zum Herstellen eines Glasartikels gemäß Anspruch 4,
**dadurch gekennzeichnet, dass** die thermische Nachbehandlung inklusive dem Entspannungskühlen in einem einzigen Ofen durchgeführt werden.

6. Verfahren zum Herstellen eines Glasartikels gemäß einem der vorhergehenden Ansprüche,
**dadurch gekennzeichnet, dass** der Glasartikel einer Behandlungstemperatur T_{B} ≤ T_{g}+100 K ausgesetzt ist.

7. Verfahren zum Herstellen eines Glasartikels gemäß einem der vorhergehenden Ansprüche,
**dadurch gekennzeichnet, dass** der Glasartikel für eine Behandlungszeit t_{B} ≤ 360 min der Temperatur T_{B} ausgesetzt ist.

8. Verfahren zum Herstellen eines Glasartikels gemäß einem der vorhergehenden Ansprüche,
**dadurch gekennzeichnet, dass** der Glasartikel zu Beginn der thermischen Nachbehandlung in einem Ofen angeordnet wird, der auf die Behandlungstemperatur T_{B} eingestellt ist.

9. Glasartikel aus einem Borosilikatglas mit einem Al₂O₃-Gehalt von unter 1 Gew.-% und einem ZrO₂-Gehalt von 2-12 Gew.-% **gekennzeichnet durch** eine Alkaliabgabe A ≤ 0,5 mg/l Na₂O-Äquivalenz gemäß ISO 4802 oder eine Alkaliabgabe A ≤ 3 mg/l Na₂O-Äquivalenz gemäß USP 660 (Glasgrieß) oder ISO 720 (Glasgrieß), hergestellt nach dem Verfahren gemäß einem der Ansprüche 1 bis 8.

10. Glasartikel gemäß Anspruch 9,
**dadurch gekennzeichnet, dass** der Glasartikel ein Glasfläschchen, eine Glasphiole, eine Ampulle, insbesondere eine Glasampulle oder eine Zylinderampulle, eine Karpule, ein Spritzenkörper, ein Vial, ein Stab, ein innen- und/oder außenstrukturiertes rohrähnliches Gebilde oder Rohr oder ein Halbzeug zur Herstellung eines der genannten Artikel oder nach USP 660 hergestellter Glasgrieß ist.

11. Glasartikel gemäß einem der Ansprüche 9 oder 10,
**gekennzeichnet durch** eine um ≥ 15 % reduzierte Alkaliabgabe A gegenüber einem unbehandelten Referenzglasartikel gleicher Zusammensetzung.

12. Glasartikel gemäß einem der Ansprüche 9 bis 11,
**dadurch gekennzeichnet, dass** das Borosilikatglas die folgende Zusammensetzung aufweist:
| | |
|---|---|
| - SiO₂ | 60 - 78 Gew.-%, |
| - B₂O₃ | 7 - 20 Gew.-%, |
| - Li₂O | 0 - 2 Gew.-%, |
| - Na₂O | 0 - 6,5 Gew.-%, |
| - K₂O | 2,5 - 12 Gew.-%, |
| - ZnO | 0 - 2 Gew.-%, |
| - ZrO₂ | 2 - 12 Gew.-%, |
| - Läutermittel | 0 - 1 Gew.-%, |
| - Al₂O₃ | < 1 Gew.-%, |
| - optional einen oder mehrere der Bestandteile MgO, CaO, BaO, TiO₂, SrO mit insgesamt < 2 Gew.-%, und | |
| - unvermeidbare Verunreinigungen. | |

13. Verwendung des Glasartikels gemäß einem der Ansprüche 9 bis 12 als Aufbewahrungsartikel für pharmazeutische Substanzen oder im Bereich der Medizintechnik.

## Claims

1. Process for producing a glass article having a high hydrolytic resistance, in which a glass tube composed of a borosilicate glass having an Al₂O₃ content of less than 1% by weight and a ZrO₂ content of 2-12% by weight and having a glass transition temperature T_{g} is firstly formed into a glass article and is subsequently subjected to a thermal after-treatment, **characterized in that** the glass article is subjected to a treatment temperature T_{B} ≥ T_{g} + 5 K for a treatment time of t_{B} ≥ 5 min in the thermal after-treatment and is subsequently cooled.

2. Process for producing a glass article according to Claim 1, **characterized in that** the borosilicate glass has the following composition:
| | |
|---|---|
| - SiO₂ | 60-78% by weight, |
| - B₂O₃ | 7-20% by weight, |
| - Li₂O | 0-2% by weight, |
| - Na₂O | 0-6.5% by weight, |
| - K₂O | 2.5-12% by weight, |
| - ZnO | 0-2% by weight, |
| - ZrO₂ | 2-12% by weight, |
| - refining agent | 0-1% by weight, |
| - Al₂O₃ | <1% by weight, |
| - optionally one or more of the constituents MgO, CaO, BaO, TiO₂, SrO in a total amount of <2% by weight, and | |
| - unavoidable impurities. | |

3. Process for producing a glass article according to Claim 1 or 2, **characterized in that** the borosilicate glass has a glass transition temperature of 500°C ≤ T_{g} ≤ 620°C.

4. Process for producing a glass article according to any of the preceding claims, **characterized in that** the glass article is subjected to annealing cooling at the end of the thermal after-treatment.

5. Process for producing a glass article according to Claim 4, **characterized in that** the thermal after-treatment including the annealing cooling is carried out in a single furnace.

6. Process for producing a glass article according to any of the preceding claims, **characterized in that** the glass article is subjected to a treatment temperature T_{B} ≤ T_{g} + 100 K.

7. Process for producing a glass article according to any of the preceding claims, **characterized in that** the glass article is subjected to the temperature T_{B} for a treatment time t_{B} ≤ 360 min.

8. Process for producing a glass article according to any of the preceding claims, **characterized in that** the glass article is arranged in a furnace which has been set to the treatment temperature T_{B} at the beginning of the thermal after-treatment.

9. Glass article composed of a borosilicate glass having an Al₂O₃ content of less than 1% by weight and a ZrO₂ content of 2-12% by weight, **characterized by** an alkali release A ≤ 0.5 mg/l of Na₂O equivalence in accordance with ISO 4802 or an alkali release A ≤ 3 mg/l of Na₂O equivalence in accordance with USP 660 (glass grains) or ISO 720 (glass grains), produced by the process according to any of Claims 1 to 8.

10. Glass article according to Claim 9, **characterized in that** the glass article is a glass bottle, a glass phial, an ampoule, in particular a glass ampoule or a cylindrical ampoule, a cartridge, a syringe body, a vial, a rod, an internally and/or externally structured tubelike structure or tube or a semifinished part for producing one of the articles mentioned or glass grains produced in accordance with USP 660.

11. Glass article according to either of Claims 9 and 10, **characterized by** an alkali release A reduced by ≥ 15% compared to an untreated reference glass article having the same composition.

12. Glass article according to any of Claims 9 to 11, **characterized in that** the borosilicate glass has the following composition:
| | |
|---|---|
| - SiO₂ | 60-78% by weight, |
| - B₂O₃ | 7-20% by weight, |
| - Li₂O | 0-2% by weight, |
| - Na₂O | 0-6.5% by weight, |
| - K₂O | 2.5-12% by weight, |
| - ZnO | 0-2% by weight, |
| - ZrO₂ | 2-12% by weight, |
| - refining agent | 0-1% by weight, |
| - Al₂O₃ | <1% by weight, |
| - optionally one or more of the constituents MgO, CaO, BaO, TiO₂, SrO in a total amount of <2% by weight, and | |
| - unavoidable impurities. | |

13. Use of the glass article according to any of Claims 9 to 12 as storage article for pharmaceutical substances or in the field of medical technology.

## Revendications

1. Procédé pour la préparation d'un article de verre doté d'une résistance hydrolytique élevée, dans lequel tout d'abord un tube de verre composé d'un verre de borosilicate doté d'une teneur en Al₂O₃ inférieure à 1 % en poids et d'une teneur en ZrO₂ de 2 à 12 % en poids et doté d'une température de transition vitreuse T_{g} est déformé pour donner un article de verre et ensuite est soumis à un post-traitement thermique,
**caractérisé en ce que** l'article de verre est exposé, lors du post-traitement thermique, à une température de traitement T_{B} ≥ T_{g} + 5 K pendant un temps de traitement t_{B} ≥ 5 min et est ensuite refroidi.

2. Procédé pour la préparation d'un article de verre selon la revendication 1,
**caractérisé en ce que** le verre de borosilicate présente la composition suivante :
| | |
|---|---|
| - SiO₂ | 60 à 78 % en poids, |
| - B₂O₃ | 7 à 20 % en poids, |
| - Li₂O | 0 à 2 % en poids, |
| - Na₂O | 0 à 6,5 % en poids, |
| - K₂O | 2,5 à 12 % en poids, |
| - ZnO | 0 à 2 % en poids, |
| - ZrO₂ | 2 à 12 % en poids, |
| - agent d'affinage | 0 à 1 % en poids, |
| - Al₂O₃ | < 1 % en poids, |
| - éventuellement l'un ou plusieurs des ingrédients MgO, CaO, BaO, TiO₂, SrO en une quantité totale de < 2 % en poids, et | |
| - des impuretés inévitables. | |

3. Procédé pour la préparation d'un article de verre selon la revendication 1 ou 2,
**caractérisé en ce que** le verre de borosilicate présente une température de transition vitreuse 500 °C ≤ T_{g} ≤ 620 °C.

4. Procédé pour la préparation d'un article de verre selon l'une quelconque des revendications précédentes,
**caractérisé en ce que** l'article de verre est refroidi par détente à la fin du post-traitement thermique.

5. Procédé pour la préparation d'un article de verre selon la revendication 4,
**caractérisé en ce que** le post-traitement thermique, y compris le refroidissement par détente, sont mis en œuvre dans un seul four.

6. Procédé pour la préparation d'un article de verre selon l'une quelconque des revendications précédentes,
**caractérisé en ce que** l'article de verre est exposé à une température de traitement T_{B} ≤ T_{g} + 100 K.

7. Procédé pour la préparation d'un article de verre selon l'une quelconque des revendications précédentes,
**caractérisé en ce que** l'article de verre est exposé à la température T_{B} pendant un temps de traitement t_{B} ≤ 360 min.

8. Procédé pour la préparation d'un article de verre selon l'une quelconque des revendications précédentes,
**caractérisé en ce que** l'article de verre est disposé, au début du post-traitement thermique, dans un four qui est ajusté à la température de traitement T_{B}.

9. Article de verre composé d'un verre de borosilicate doté d'une teneur en Al₂O₃ inférieure à 1 % en poids et d'une teneur en ZrO₂ de 2 à 12 % en poids, **caractérisé par** une libération d'alcalin A ≤ 0,5 mg/l d'équivalents de Na₂O selon la norme ISO 4802 ou une libération d'alcalin A ≤ 3 mg/l d'équivalents de Na₂O selon la norme USP 660 (gruau de verre) ou ISO 720 (gruau de verre), préparé par le procédé selon l'une quelconque des revendications 1 à 8.

10. Article de verre selon la revendication 9,
**caractérisé en ce que** l'article de verre est un flacon de verre, une fiole de verre, une ampoule, en particulier une ampoule de verre ou une ampoule cylindrique, une carpule, un corps de seringue, un flaconnet, une tige, une structure similaire à un tube ou un tube structuré(e) à l'intérieur et/ou à l'extérieur ou un produit semi-fini pour la préparation de l'un des articles mentionnés ou d'un gruau de verre préparé selon la norme USP 660.

11. Article de verre selon l'une quelconque des revendications 9 et 10,
**caractérisé par** une libération d'alcalin A réduite de ≥ 15 % par rapport à un article de verre de référence non traité de composition identique.

12. Article de verre selon l'une quelconque des revendications 9 à 11,
**caractérisé en ce que** le verre de borosilicate présente la composition suivante :
| | |
|---|---|
| - SiO₂ | 60 à 78 % en poids, |
| - B₂O₃ | 7 à 20 % en poids, |
| - Li₂O | 0 à 2 % en poids, |
| - Na₂O | 0 à 6,5 % en poids, |
| - K₂O | 2,5 à 12 % en poids, |
| - ZnO | 0 à 2 % en poids, |
| - ZrO₂ | 2 à 12 % en poids, |
| - agent d'affinage | 0 à 1 % en poids, |
| - Al₂O₃ | < 1 % en poids, |
| - éventuellement l'un ou plusieurs des ingrédients MgO, CaO, BaO, TiO₂, SrO en une quantité totale de | < 2 % en poids, et |
| - des impuretés inévitables. | |

13. Utilisation de l'article de verre selon l'une quelconque des revendications 9 à 12 en tant qu'article de conservation pour des substances pharmaceutiques ou dans le domaine de la technique médicale.
